# EUROPEAN PATENT SPECIFICATION

(11) **EP 2 163 465 B1**
(45) Date of publication and mention of the grant of the patent: **05.08.2015**
(21) Application number: 09011622.9
(22) Date of filing: 10.09.2009
(51) Int. Cl.: B62K 11/14, B62K 23/02, H01H 9/06

(54) **Handle switch assembly for a motorcycle**
Handgriffschaltervorrichtung für ein Motorrad
Dispositif de commutateur électrique de poignée pour une motocyclette

(30) Priority: 11.09.2008 JP 2008232823
(43) Date of publication of application: 17.03.2010
(73) Proprietor: SUZUKI MOTOR CORPORATION, Hamamatsu-shi Shizuoka 432-8611 (JP)
(72) Inventor: Deguchi, Hiromi, Hamamatsu-Shi Shizuoka-ken 432-8611 (JP)
(74) Representative: Vierheilig, Achim

(56) References cited:
- EP-A1- 1 323 955
- FR-A3- 2 801 558
- JP-A- 2004 058 778
- JP-A- 2005 121 059

## Description

### BACKGROUND OF THE INVENTION

### Field of the Invention

The present invention relates to a handle switch assembly for a motorcycle according to the preamble of claim 1.

Description of the Related Art assembly of a motorcycle according to the preamble of claim 1.

### Description of the Related Art

Conventional motorcycles have various switches arranged on and around the handle bar, and the driver performs desired actions by manipulating the switches while running. Some recent automatic transmission motorcycles have a plurality of gear transmission modes. For example, Patent Document 1 (Japanese Patent Laid-Open No. 2005-121059) discloses an automatic transmission motorcycle having a shift switch for switching the gear transmission mode (driving mode) that is included in a handle switch assembly disposed near the handle bar.

The shift switch disclosed in Patent Document 1 is a seesaw switch, which is included in the handle switch assembly provided on the left-hand side of the driver and is disposed at a position above the center of the handle bar to face the driver.

To manipulate the shift switch disposed at this position to perform UP/DOWN switching operation, the thumb of the left hand has to be raised to above the center of the handle bar.

For the handle switch assembly of the motorcycle configured as described above, when the driver raises the thumb of the left hand to above the center of the handle bar to manipulate the seesaw-type shift switch disposed above the center of the handle bar so as to face the driver, the driver cannot hold the handle bar between his/her thumb and index finger. In particular, when the motorcycle is decelerated, there arises a problem that it is difficult to support the weight shifted forward on the handle bar. EP 1 323 955

A1 discloses a handle switch assembly according to the preamble of claim 1 in which the plurality of switches includes two rocker switches. A first rocker switch to be manipulated by the thumb of a driver in order to shift from a lower gear to a higher gear. At the front side of the switch box there is provided a further rocker switch to be manipulated by an index finger of the driver gripping the handle grip in order to shift from a higher gear to a lower gear.

### SUMMARY OF THE INVENTION

In view of the circumstances described above, an object of the present invention is to provide a handle switch assembly for a motorcycle that can be manipulated without compromising the handleability during running.

The above object can be achieved by providing a handle switch assembly for a motorcycle having the features of claim 1.

Preferred embodiments are defined by the dependent claims following modes may be provided.

In the handle switch assembly for a motorcycle having the configurations and characteristics described above, the driver can manipulate the first operation switch without significantly moving the thumb, so that the handleability is not compromised.

Furthermore, since the thumb is positioned below the center of the handle grip when the driver holds the handle grip, the first operation switch disposed below the center of the handle grip can be manipulated by moving the thumb a short distance.

Still furthermore, since the second operation switch manipulated by the index finger is disposed at an upper portion of the front surface of the switch box, the first and second operation switches can be manipulated independently, so that erroneous operation of the switches can be avoided. In addition, since the second operation switch is disposed at a position suitable for manipulation with the index finger, the second operation switch can be manipulated without compromising the handleability.

In addition, since the root of the index finger is positioned above the center of the handle grip when the driver holds the handle grip, the second operation switch disposed above the center of the handle grip can be manipulated by moving the index finger a short distance.

Mode switching of the engine power to a lower power mostly occurs during deceleration. The weight of the driver shifted during the mode switching can be readily supported by pressing the root of the thumb against the handle grip.

Furthermore, mode switching of the transmission gear ratio to a lower gear mostly occurs during deceleration. The weight of the driver shifted during the mode switching can be readily supported by pressing the root of the thumb against the handle grip.

Still furthermore, mode switching of the engine power to a higher power mostly occurs during acceleration. The weight of the driver shifted during the mode switching can be readily supported by holding the handle grip with the remaining fingers (or the remaining fingers except the index finger).

Still furthermore, mode switching of the transmission gear ratio to a higher gear mostly occurs during acceleration. The weight of the driver shifted during the mode switching can be readily supported by holding the handle grip with the remaining fingers (or the remaining fingers except the index finger).

Moreover, there is no need to manually recover the switches to the off state after manipulation thereof, so that the switches can be manipulated without compromising the handleability.

Furthermore, since the switches can be manipulated without significantly moving the thumb in the lateral direction of the motorcycle, the switches can be manipulated in a shorter time, and erroneous manipulation of the switches can be avoided.

Furthermore, the switches can be clearly distinguished from the clutch lever, so that the switches can be manipulated without compromising the handleability.

As described above, the handle switch assembly for a motorcycle according to the present invention can be manipulated without compromising the handleability during running.

The characteristics, operations and advantages of the present invention described above will be more apparently understood by the following description made to the preferred embodiment with reference to the accompanying drawings.

### BRIEF DESCRIPTION OF THE DRAWINGS

In the accompanying drawings:
Fig. 1 is a plan view of a motorcycle having a handle switch assembly according to an embodiment of the present invention;
Fig. 2A is a rear view of the handle switch assembly of the motorcycle, according to the embodiment of the present invention;
Fig. 2B is a side view of the handle switch assembly of the motorcycle, according to the embodiment of the present invention;
Fig. 3A is a plan view of the handle switch assembly of the motorcycle, according to the embodiment of the present invention showing a state where a first operation switch is being manipulated; and
Fig. 3B is a plan view of the handle switch assembly of the motorcycle, according to the embodiment of the present invention showing a state where a second operation switch is being manipulated.

### DESCRIPTION OF THE PREFERRED EMBODIMENT

In the following, a handle switch or a handle switch assembly for a motorcycle according to an embodiment of the present invention will be described with reference to the drawings. It will be understood that the words describing directions, such as "upper", "lower", "left" and "right", or like terms, are used herein with reference to illustrated states in the drawings or in actually usable state of the handle switch assembly.

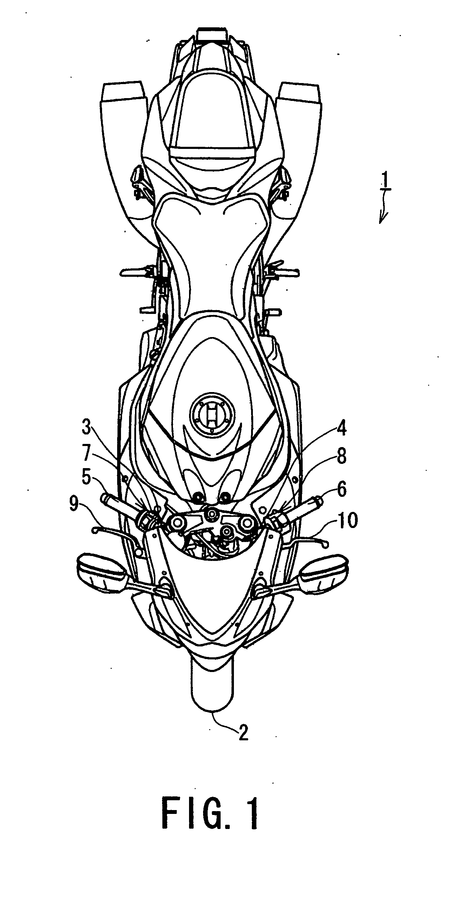

A motorcycle will be described with reference to Figs. 1 to 3.

A motorcycle 1 shown in the drawings includes a pair of left and right handle bars 3 and 4 for steering a front wheel 2, a throttle grip 5 attached to one end of the (right) handle bar 3, a handle grip 6 attached to one end of the (left) handle bar 4, a switch box 7 attached to the handle bar 3 at a position adjacent to the grip 5, a switch box 8 attached to the handle bar 4 at a position adjacent to the grip 6, a brake lever 9 disposed forward of the grip 5, and a clutch lever 10 disposed forward of the grip 6.

The throttle grip 5, the switch box 7, the brake lever 9 and the clutch lever 10 are implemented by well-known techniques. Then, the following description will be focused on the switch box 8 disposed adjacent to the left handle grip 6.

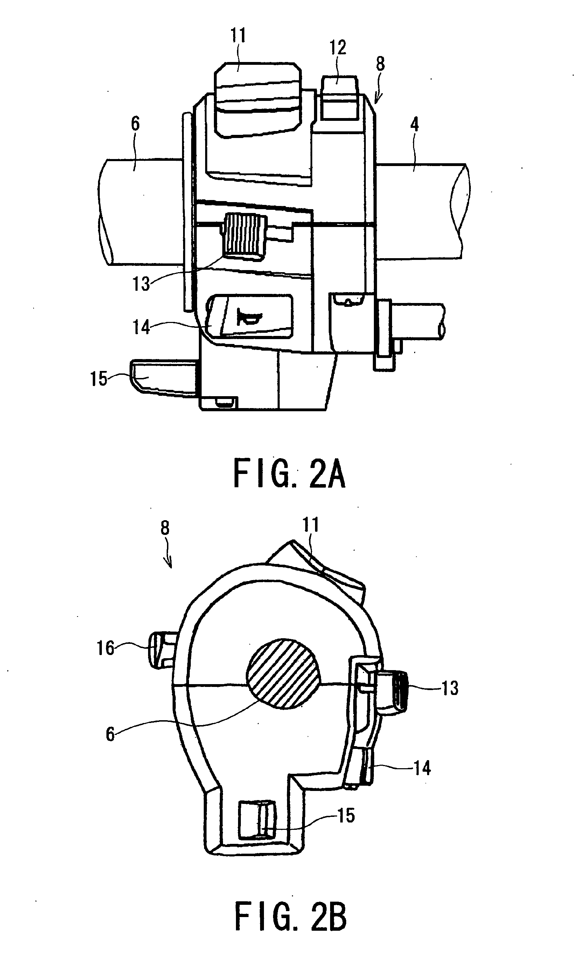

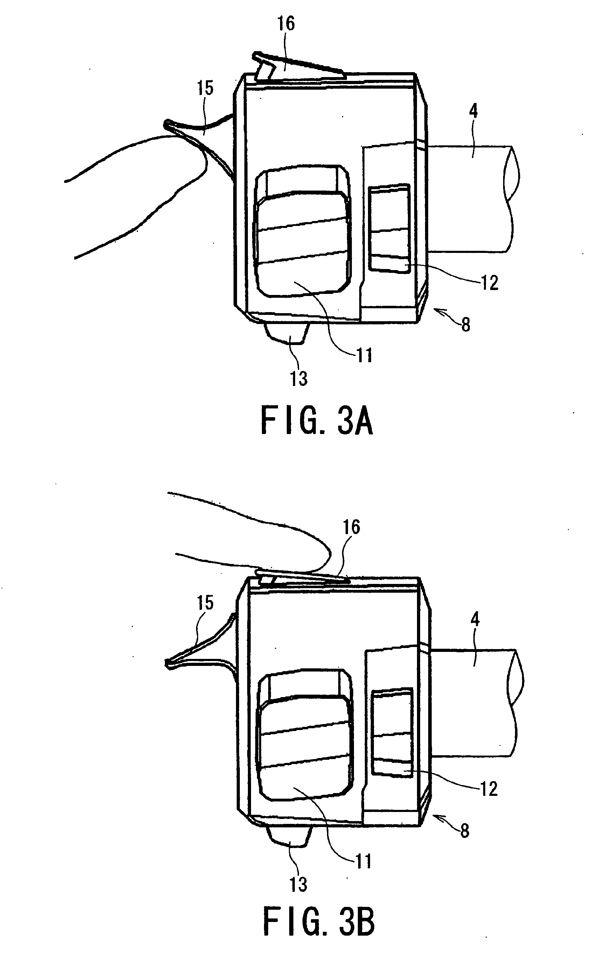

As shown in Figs. 2 and 3, the switch box 8 has a plurality of switches that are essentially arranged to be viewable to the driver.

In this embodiment, the switch box 8 has a flash/dimmer switch 11 and a hazard switch 12 disposed adjacent to each other in the lateral direction (left-to-right direction in Fig. 2A) of the motorcycle at positions close to the upper surface of the switch box 8, a turn signal switch 13 swingable in the lateral direction disposed around the center of the rear surface of the switch box 8, a horn switch 14 disposed at a lower part of the rear surface of the switch box 8, a first operation switch 15 disposed at a lower part of the outer side surface of the switch box 8, and a second operation switch 16 disposed at an upper part of the front surface of the switch box 8.

The switches 12 to 14 attain well-known switching functions, and appropriate types of switches 12 to 14, including a swing-type switch, are chosen by considering the operability of the switches. The switches 12 to 14 are essentially manipulated with the thumb (or index finger) of the driver.

In order to allow the driver to manipulate the switch with the thumb, the first operation switch 15 is disposed at a lower part of the outer side surface of the switch box 8, or more specifically, at a position below the center of the handle grip 6 and preferably protrudes in the lateral direction from the outer side surface of the switch box 8. The first operation switch 15 serves as a mode switch that switches the engine power to a lower power (or to engine power characteristics with which the response to a manipulation of the throttle grip 5 is lower) or a mode switch that switches the transmission gear ratio of the transmission to a lower gear, for example.

In order to allow the driver to manipulate the switch with the index finger, the second operation switch 16 is disposed at an upper part of the front surface of the switch box 8, or more specifically, at a position above the center of the handle grip 6 and preferably does not protrude in the lateral direction beyond the outer side surface of the switch box 8.

The second operation switch 16 serves as a mode switch that switches the engine power to a higher power side (i.e., to engine power characteristic side with which the response to a manipulation of the throttle grip 5 is higher) or a mode switch that switches the transmission gear ratio of the transmission to a higher speed side gear.

The first operation switch 15 and the second operation switch 16 have an automatic recovery mechanism that always biases the switch to the off state when the switch is not manipulated.

In general, to avoid confusion in mode switching operation, it is preferable for one switch not to have two or more switching functions.

Therefore, for UP/DOWN mode switching, for example, at least two physically separate switches are preferably provided.

In addition, if a switching operation requires the driver to manipulate a plurality of switches with one finger at the same time, the switching operation is too complicated. Thus, one switching manipulation is preferably allocated to one finger.

When the driver holds the handle grip 6, the thumb and the index finger are placed closer to the switch box 8. Therefore, when each of these fingers is responsible for one switch, the driver can optimally intuitively manipulate two switches.

The first operation switch 15 is disposed below the handle grip 6 to protrude toward the hand holding the handle grip 6, that is, in the lateral direction from the lower part of the outer side surface of the switch box 8. In addition, as shown in Fig. 3A, the first operation switch 15 is turned on by pushing the switch in the direction of travel of the motorcycle with the thumb. Therefore, the thumb does not need to be moved to above the handle grip 6 during the switching operation, and thus, the switching operation can be performed without compromising the handleability.

Since the first operation switch 15 protrudes in the lateral direction from the lower part of the outer side surface of the switch box 8, the first operation switch 15 can be easily distinguished from the other switches, such as the horn switch 14, and thus, erroneous operation of the switch can be prevented.

Since the first operation switch 15 is manipulated in the direction in which the cushion of the thumb of the driver holding the handle grip 6 is directed, the position and direction of the thumb are comfortable throughout the switching operation, and the first operation switch 15 can be manipulated by moving the thumb a short distance substantially equal to the distance of movement of the first operation switch 15. Therefore, the switching operation can be more easily and naturally performed without compromising the handleability.

In particular, since the switching operation is performed by moving the thumb in the direction to hold the handle grip 6 more tightly, the driver takes a posture ready for forward weight shift during deceleration while manipulating the first operation switch 15 and thus can endure the weight with reliability. Therefore, the stability of the motorcycle at a time of turning a corner can be significantly improved.

On the other hand, as shown in Fig. 3B, the switching operation with the index finger can be performed less uncomfortably if the movement of the index finger in the switching operation is close to that in the operation of holding the handle grip 6, which is an ordinary operation in driving the motorcycle.

Therefore, the second operation switch 16 is optimally disposed at an upper part of the front surface of the switch box 8. Depending on the model of the motorcycle, for example, the switch box 8 has a flash switch at the upper part of the front surface thereof. However, in this embodiment, the single flash/dimmer switch 11 that doubles as a flash switch and a well-known dimmer switch is provided, thereby minimizing the number of switches of the switch box 8 and allowing the driver to perform switching operations involved with the headlight with one switch so that the driver can easily become accustomed to the positions and operations of the switches.

More specifically, the switch which can spring back, when is pushed down, is disposed at a low-beam side portion of the ordinary dimmer switch. This switch serves various functions by setting the headlight to low beam when the switch is pushed to the low-beam side position, setting the headlight to high beam when the switch is pushed to the other position, and making the headlight flash when the switch is further pushed down from the low-beam side position.

These two operation switches 15 and 16 have a plurality of operations modes of different power characteristics, such as high power mode, intermediate power mode and low power mode.

The operation switches 15 and 16 are rotary-type switches. That is, these switches have three operation modes depending on various settings including the timing of ignition and the opening of the sub-throttle valve, (1) a high power mode (A mode) in which the response of the engine power to a change of the opening of the main throttle valve is high, (2) a low power mode (C mode) in which the response of the engine power to a change of the opening of the main throttle valve is low, and (3) an intermediate power mode (B mode) in which the response of the engine to a change of the opening of the main throttle valve is moderate, and in such case, the first operation switch 15 changes the operation mode in order of A →B→C→A→ and so on in response to manipulation thereof, and the second operation switch 16 changes the operation mode in reverse order of C→B→A→C→ and so on in response to manipulation thereof.

The switching of the operation mode may be performed when the motorcycle is approaching a curve as described below, for example.

Provided that the A mode (high power mode) in which the response to a throttle manipulation is high is used when the motorcycle is running straight, and the B mode (intermediate power mode) is used when the motorcycle turns a curve because fine adjustment of the throttle is easy during cornering, when the motorcycle approaches a curve, the driver can switch the operation mode from the A mode to the B mode while decelerating the motorcycle only by pushing the first operation switch 15 with the thumb once.

Further, in the decelerating period, the driver may shift down by manipulating the clutch lever 10 as the speed of the motorcycle decreases. In that case, since the switch is manipulated with the thumb, the driver can shift down with the thumb remaining in the position to hold the handle grip 6.

Although the motorcycle turns the curve next in the B mode, the motorcycle is accelerated substantially at the same time as exiting the curve, and therefore, the operation mode has to be switched from the B mode back to the A mode.

In this occasion, the driver may change the operation mode from the B mode back to the A mode simply by pushing the second operation switch 16 with the index finger once.

Although the index finger is used also to manipulate the clutch lever, the shift-up operation in acceleration of the motorcycle does not need to be performed as quickly as the shift-down operation, and therefore, it poses no problem for driving the motorcycle.

In addition, different fingers are used in different situations. That is, the thumb is used when the motorcycle enters the curve, and the index finger is used when the motorcycle exits the curve. Therefore, erroneous switching operations may be avoided.

In the embodiment disclosed above, the engine power characteristics are changed by switching the operation modes. However, the switch assembly according to the present invention is not limited to any particular implementation and can be used for any application that involves two-way switching. For example, the switch assembly may be used for shift change.

Specifically, the present invention may be applied to a transmission mode switch of a motorcycle having an automatic transmission (which switches between a power mode, which is power-oriented, and an economy mode, which is fuel-efficiency-oriented) or a shift switch for manual transmission of a motorcycle having a manual transmission with a manual transmission mode, for example.

In this case, the first operation switch 15 manipulated with the thumb of the left hand of a driver preferably serves as the power mode switch or shift down switch, and the second operation switch 16 manipulated with the index finger of the right hand preferably serves as the economy mode switch or shift up switch.

## Claims

1. A handle switch assembly for a motorcycle (1) having a front wheel (2) and a rear wheel, a handle bar (4) steering the front wheel (2) and a handle grip (6) attached to one end of the handle bar (4), the handle switch assembly comprising: a switch box (8) adapted to be mounted to the handle bar (4) at a position adjacent to the handle grip (6); and a plurality of switches (11-16) provided on the switch box (8), wherein the plurality of switches includes a first operation switch (15) which is a mode switch for switching the engine power to a lower power side or for switching the transmission gear ratio of a transmission to a lower speed side gear, and a second operation switch (16) which is a mode switch for switching the transmission gear ratio of the transmission to a higher speed side gear or for switching the engine power to a higher power side, **characterized in that** the first operation switch (15) is disposed below a centre of the handle grip (6) at a lower portion of the switch box (8), and extends in a lateral direction of the motorcycle from the outer side surface of the switch box (8), that the first operation switch (15) is adapted to be manipulated with a thumb of a driver gripping the handle grip (6) with the thumb positioned below the handle grip (6), that the second operation switch (16) is adapted to manipulated with an index finger of the driver gripping the handle grip (6) and that the second operation switch (16) is provided at an upper portion of a front surface of the switch box (8) above the center of the handle grip (6).

2. The handle switch assembly for a motorcycle according to claim 1, wherein the first and second operation switches (15, 16) have an automatic recovery mechanism that can always bias the switches to an off state when the switches are not operated.

3. The handle switch assembly for a motorcycle according to claim 1, wherein the second operation switch (16) does not extend in a lateral direction of the motorcycle beyond an outer surface of the switch box (8).

## Patentansprüche

1. Handgriffschaltervorrichtung für ein Motorrad (1) mit einem Vorderrad (2) und einem Hinterrad, einer das Vorderrad (2) lenkenden Lenkstange (4) und einem an einem Ende der Lenkstange (4) befestigten Handgriff (6), wobei die Handgriffschaltervorrichtung umfasst: einen Schaltkasten (8), ausgebildet zur Anbringung an der Lenkstange (4) an einer dem Handgriff (6) benachbarten Stelle; und mehrere an dem Schaltkasten (8) vorgesehene Schalter, wobei die mehreren Schalter einen ersten Betätigungsschalter (15) aufweisen, bei dem es sich um einen Betriebsartschalter zum Schalten der Motorleistung auf eine Geringleistungsstufe oder zum Schalten des Getriebeübersetzungsverhältnisses eines Getriebes auf einen Niedriggeschwindigkeitsgang ist, und einen zweiten Bestätigungsschalter (16), bei dem es sich um einen Betriebsartschalter zum Schalten des Übersetzungsverhältnisses des Getriebes auf einen höheren Geschwindigkeitsgang oder zum Umschalten der Motorleistung auf eine höhere Leistungsstufe handelt, **dadurch gekennzeichnet, dass** der erste Betätigungsschalter (15) sich unterhalb einer Mitte des Handgriffs (6) an einem unteren Bereich des Schaltkastens (6) befindet und sich in seitlicher Richtung des Motorrads ausgehend von der äußeren Seitenfläche des Schaltkastens (8) erstreckt, dass der erste Betätigungsschalter (15) dazu ausgebildet ist, von einem Daumen eines den Handgriff (6) ergreifenden Fahrers manipuliert zu werden, wobei sich der Daumen unterhalb des Handgriffs (6) befindet, dass der zweite Betätigungsschalter (16) dazu ausgebildet ist, mit einem Zeigefinger des den Handgriff (6) ergreifenden Fahrers manipuliert zu werden, und dass der zweite Betätigungsschalter (16) sich an einem oberen Bereich einer Vorderseite des Schaltkastens (8) oberhalb der Mitte des Handgriffs (6) befindet.

2. Handgriffschaltervorrichtung für ein Motorrad nach Anspruch 1, bei der der erste und der zweite Betätigungsschalter (15, 16) einen automatischen Rückstellmechanismus aufweisen, der die Schalter stets in eine Aus-Stellung vorspannt, wenn die Schalter nicht betätigt werden.

3. Handgriffschaltervorrichtung für ein Motorrad nach Anspruch 1, bei der der zweite Betätigungsschalter (16) sich nicht in eine seitliche Richtung des Motorrads über eine Außenfläche des Schaltkastens (8) hinaus erstreckt.

## Revendications

1. Ensemble d'interrupteur de poignée destiné à une motocyclette (1) présentant une roue avant (2) et une roue arrière, un guidon (4) dirigeant la roue avant (2) et une poignée (6) fixée à une extrémité du guidon (4), l'ensemble d'interrupteur de poignée comprenant : une boîte de commutation (8) apte à être montée sur le guidon (4) en une position adjacente à la poignée (6), et une pluralité d'interrupteurs (11-16) prévus sur la boîte de commutation (8), dans lequel la pluralité d'interrupteurs inclut un premier interrupteur de fonctionnement (15), lequel est un interrupteur de mode destiné à commuter la puissance de moteur sur un côté de puissance inférieure ou à commuter le rapport de démultiplication de transmission d'une transmission sur un rapport de vitesse inférieure, et un second interrupteur de fonctionnement (16), lequel est un interrupteur de mode destiné à commuter le rapport de démultiplication de transmission de la transmission sur un rapport de vitesse supérieure ou à commuter la puissance de moteur sur un côté de puissance supérieure, **caractérisé en ce que** le premier interrupteur de fonctionnement (15) est disposé au-dessous d'un centre de la poignée (6) au niveau d'une partie inférieure de la boîte de commutation (8) et s'étend dans une direction latérale de la motocyclette à partir de la surface latérale extérieure de la boîte de commutation (8), que le premier interrupteur de fonctionnement (15) est apte à être manipulé avec un pouce d'un conducteur saisissant la poignée (6) avec le pouce positionné au-dessous de la poignée (6), que le second interrupteur de fonctionnement (16) est apte à être manipulé avec un index du conducteur saisissant la poignée (6), et que le second interrupteur de fonctionnement (16) est fourni au niveau d'une partie supérieure d'une surface avant de la boîte de commutation (8) au-dessus du centre de la poignée (6).

2. Ensemble d'interrupteur de poignée destiné à une motocyclette selon la revendication 1, dans lequel les premier et second interrupteurs de fonctionnement (15, 16) comprennent un mécanisme de récupération automatique qui peut toujours solliciter les interrupteurs sur un état hors tension lorsque les interrupteurs ne sont pas actionnés.

3. Ensemble d'interrupteur de poignée destiné à une motocyclette selon la revendication 1, dans lequel le second interrupteur de fonctionnement (16) ne s'étend pas dans une direction latérale de la motocyclette au-delà d'une surface extérieure de la boîte de commutation (8).
